# EUROPEAN PATENT APPLICATION

(11) **EP 1 471 348 A1**
(43) Date of publication of application: **27.10.2004**
(21) Application number: 04252227.6
(22) Date of filing: 16.04.2004
(51) Int. Cl.: G01N 27/42, G01N 27/416

(54) **Electrochemical method for determining a quantity of an organic component in an electroplating bath**

(30) Priority: 25.04.2003 US 465388 P
(71) Applicant: Rohm and Haas Electronic Materials, L.L.C., Marlborough, Massachusetts 01752 (US)
(72) Inventor: Sonnenberg, Wade, Edgartown, Massachusetts 02539 (US); Barstad, Leon R., Raynham, Massachusetts 02767 (US); Cruz, Raymond, Watertown, Massachusetts 02453 (US); Hamm, Gary, Medford, Massachusetts 02155 (US); Kapeckas, Mark, Marlborough, Massachusetts 01752 (US); Reddington, Erik, Ashland, Massachusetts 01721 (US); Price, Katie, Stoneham, Massachusetts 02120 (US); Buckley, Thomas, Rocky Hill, Conneticut 06067 (US); Goodrich, Trevor, Windsor, Massachusetts 01270 (US)
(74) Representative: Kent, Venetia Katherine

(57) **Abstract**

Electrochemical analytical methods for determining the quantity of organic components such as brighteners, suppressors, levelers, surfactants or defoamers in an electroplating bath. The analytical methods work over a broad concentration range of organic components and are sensitive in measuring organic bath components at low concentrations.

One method of determining a quantity of an organic component in a bath includes the steps of: a) obtaining a plurality of bath samples each having a known and different quantity of an organic component; b) optimizing a working electrode through a predetermined sequence that includes galvanostatic steps, voltammetric steps by cycles, or pulses, or open circuit steps, or combinations thereof and including a surface optimization step for each bath sample; c) preparing a calibration curve plotting the charge passed during a metal plating or metal stripping step of the sequence versus the organic component being sought; d) obtaining a bath sample having an unknown quantity of the organic component being sought and performing the same sequence of galvanostatic, voltammetric, or open circuit steps or combinations thereof and including a surface optimization step for the bath sample; e) measuring the charge passed during the metal plating or the metal stripping step of the sequence for the bath sample having the unknown quantity of the organic component; and f) comparing the result obtained in e) to the results in a calibration curve obtained in c) to determine the amount of the organic component present in the bath sample containing the unknown quantity of the organic component.

## Description

### Background of the Invention

The present invention is directed to an analysis method for analyzing organic components of an electroplating bath. More specifically, the present invention is directed to a method for analyzing organic components of an electroplating bath by an optimized cyclic process.

Electroplating solutions or baths for copper and other metals are typically aqueous, or mostly aqueous, solutions composed of metal compounds or salts, ionic electrolytes, and various additives such as brighteners, suppressors, levelers, accelerators, surfactants, and defoamers. These electroplating baths, which are used to deposit metals or semimetals such as copper, nickel, gold, palladium, platinum, ruthenium, rhodium, tin, zinc, antimony, or alloys such as copper-tin (brass), copper-zinc (bronze), tin-lead, nickel-tungsten, and cobalt-tungsten-phosphide are used in applications such as the fabrication of electronic devices and components, such as conductive circuits for printed circuit boards, multichip modules, and semiconductor devices.

Reliable operation of electroplating baths in a manufacturing process requires that methods of analysis are employed to determine the appropriate concentrations of the reagent species for bath startup as accurately as permissible in the art. The analytical methods are also used to determine the concentrations of species in the bath during operation, often with on-line feedback control, to allow the components of the bath to be monitored and adjusted as required to maintain concentrations within pre-determined limits. Bath analytical methods also are used to determine the chemical identity and concentrations of species that are produced in the bath as a consequence of chemical and electrochemical reactions that take place during bath operation and/or idling. A deficiency or excess of bath components may result in defective electroplated products such as printed wiring boards and integrated circuits. Accordingly, a method that measures bath components accurately is highly desirable.

Electrochemical methods are used principally for the analysis of acid copper plating baths used for plating circuitry on printed wiring boards and integrated circuits. Besides the inorganic components of these plating solutions (copper ions, sulfuric acid and small amounts of chloride ions) the baths contain one or more organic components (brighteners, suppressors and levelers). In the proper concentrations, these organic components give a bright, smooth deposit with excellent mechanical and electrical properties.

Analyses of plating bath components are described by Tench and coworkers in U.S. 4,132,605, and Fisher in U.S. 4,917,774 and U.S. 4,917,777. Such methods were devised to measure organic components such as brighteners in a bath containing a suppressor and inorganic components. All three patents described cyclic voltammetric analysis methods for determining organic bath components.

In accordance with the procedures of the Tench patent, the potential of a working electrode is swept through a voltammetric cycle, including a metal plating range and a metal stripping range, for at least two baths of known plating quality and an additional bath whose quality or concentration of components is to be evaluated. An integrated or peak current utilized during the metal stripping range is correlated with the quality of the bath of known quality. The integrated or peak current utilized to strip the metal in the bath of unknown quality is compared to the correlation and its quality evaluated. In one embodiment a potential of an inert working electrode is swept through the voltammetric cycle by a function generator. A counter electrode immersed in the plating bath is coupled in series with a function generator and a coulometer to measure the charge from the working electrode during the stripping part of the cycle.

A modification of the method disclosed in U.S. 4,132,605 is described in the J. Electrochem. Soc., Electrochemical Science and Technology, April, 1985, pp. 831-834 (Tench publication). In accordance with the Tench publication, contaminant build up in copper plating baths affects copper deposition rate and interferes with organic component analysis. The Tench publication discloses that rather than the continuous sweep cycle utilized in the Tench patent, a method may be used involving sequentially pulsing an electrode between plating, stripping, cleaning and equilibrium potentials.

U.S. 4,917,774 and U.S. 4,917,777 describe stepped potential methods, which are improvements on the Tench processes for determining the quantity of organic components in electroplating solutions. The Fisher patents describe a method of measuring organic components of electroplating solutions using either the sweep method of the Tench patent, the pulse method of the Tench publication, or an adaptation of the pulse method with the addition of a pause during the voltammetric cycle. The pause is effectuated by an open circuit condition, or in the alternative, an applied potential equal to or approximately to the open circuit potential of a working electrode. The pause or the open circuit potential follows the cycle of plating and stripping, or it follows the cycle of plating, stripping, cleaning and equilibrating if the cycle is a pulsed cycle. An applied potential equal to or approximately to the open circuit may be applied in lieu of an equilibration step, or an open circuit condition may be used following equilibration. During either of the applied potential or open circuit steps, contaminants are either eliminated from the working electrode surface or fail to deposit on the surface. Regardless of the mechanism workers have found that the analysis processes described in the Fisher patents are improvements over the Tench methods.

Although the Fisher patents described above were an improvement over the Tench methods for analyzing organic components of electroplating baths, workers still need analytical methods that have more sensitive responses in measuring unknown concentrations of organic components. Accordingly, there is still a need for an improved method of analyzing organic components of an electroplating bath.

### Summary of the Invention

The present invention is directed to a method of determining a quantity of an organic component in a bath including the steps of: a) obtaining a plurality of bath samples each having a known and different quantity of an organic component; b) optimizing a working electrode through a predetermined sequence that includes galvanostatic steps, voltammetric steps by cycles, or pulses, or open circuit steps, or combinations thereof and including a surface optimization step for each bath sample; c) preparing a calibration curve plotting the charge passed during a metal plating or metal stripping step of the sequence versus the organic component being sought; d) obtaining a bath sample having an unknown quantity of the organic component being sought and performing the same sequence of galvanostatic, voltammetric, or open circuit steps or combinations thereof and including a surface optimization step for the bath sample; e) measuring the charge passed during the metal plating or the metal stripping step of the sequence for the bath sample having the unknown quantity of the organic component; and f) comparing the result obtained in e) to the results in a calibration curve obtained in c) to determine the amount of the organic component present in the bath sample containing the unknown quantity of the organic component.

Surface optimization of the working electrode through a sequence of predetermined galvanostatic, voltammetric, or open circuit steps provides for an amplification in the response when measuring the organic components of a bath than if the surface optimization is not performed. Such amplified responses in measuring organic bath components provide a more sensitive determination of amounts of organic components in a bath. Workers may then monitor and control organic bath components more accurately and maintain optimum concentrations of organic bath components, thus improving electroplating bath performance.

### Brief Description of the Drawings

FIG. 1 is a schematic wiring diagram showing a device for practicing the method of the present invention.
FIG. 2 is a schematic wiring diagram for an alternative device for practicing the method of the present invention.

### Detailed Description of the Invention

The following abbreviations have the following meanings unless the text clearly indicates otherwise: CVS = cyclic voltammetric stripping; CPVS = cyclic pulse voltammetric stripping; °C = degrees Centigrade; g/L = grams per liter; cm = centimeter; mA = milliamperes; mA/cm² = milliamperes per square centimeter; mL = milliliter; mL/L = milliliters per liter; V = volts; ppm = parts per million; ppb = parts per billion; and ppt = parts per trillion.

As used throughout this specification, the term "plating" refers to metal electroplating, unless the context clearly indicates otherwise. "Deposition" and "plating" are used interchangeably throughout this specification. "Halo" refers to fluoro, chloro, bromo, and iodo. Likewise, "halide" refers to fluoride, chloride, bromide and iodide. "Alkyl" includes straight chain, branched and cyclic alkyl groups. "Brightener" refers to an organic component that increases the plating rate of the electroplating bath. The terms "brightener" and "accelerator" are used interchangeably throughout this specification. The terms "component" and "additive" are used interchangeably throughout this specification. "Leveler" refers to an organic compound that is capable of providing a substantially planar metal layer. "Energy output" refers to energy flow, energy throughput, stripping current and plating current. "Energy input" refers to potential energy, cell potential, electrode potential and reductive potential. "Coulombs" means the quantity of electrons transported and is a unit of charge.

All numerical ranges disclosed herein are inclusive and combinable in any arrangement.

In one embodiment the present invention provides a method for determining a quantity of an organic component of an electroplating bath including the steps of: a) obtaining a plurality of bath samples each having a known and different quantity of an organic component; b) passing a working electrode through a predetermined sequence of galvanostatic steps, voltammetric steps by cycles or pulses, or open circuit steps or combinations thereof and including a surface optimization step for each bath sample; c) preparing a calibration curve by plotting the charge passed during a metal plating or metal stripping step of the sequence versus the concentration of the organic component being sought; d) obtaining a bath sample having an unknown quantity of the organic component and cycling a working electrode through the predetermined sequence of galvanostatic, voltammetric, or open circuit steps or combinations thereof and including surface optimization for the bath sample; e) measuring the charge passed during the metal plating or the metal stripping step of the sequence for the bath sample having the unknown quantity of the organic component; and f) comparing the result obtained in e) to the results obtained in c) to determine the amount of the organic component present in the bath sample containing the unknown quantity of the organic component.

Any suitable galvanostatic, voltammetric, or open circuit steps or combinations thereof with the inclusion of surface optimization may be employed to practice the present invention to measure an organic component of an electroplating bath. The surface optimization step involves electrochemically transforming the surface of the working electrode from the bare metal to the metal oxide form. While not being bound by theory, the surface optimization is believed to allow for desorption of any adsorbed halide on the surface of the working electrode. The surface optimization step provides for an amplified measurement of a subsequent plating step on the working electrode during a voltammetric step. The term "amplified" within the scope of the present invention means that a smaller energy input results in a larger energy output compared to not performing the surface optimization. Improved amplification of the working electrode during plating or stripping permits workers to measure and correlate an energy output to a concentration of organic components of a bath sample, detecting organic component levels as low as 10 ppt. Prior to the method of the present invention, workers in the electroplating art were unable to measure organic bath components to levels as low as 10 ppt. For example, organic components such as brighteners may range from 100 ppm to 10 ppt. Accordingly, the methods of the present invention enable workers in the art to more sensitively determine quantities of organic bath components. Thus, workers may readily monitor electroplating processes to more sensitively determine the change in organic components than conventional analysis methods, and add organic components to or dilute baths to maintain optimum electroplating performance.

While not being bound to theory, a surface optimization of a working electrode may be achieved by applying a potential to a working electrode such that residual halide on the working electrode surface is removed. Such applied potential increases electrode sensitivity to current or energy output passing through the electrode during a voltammetric cycle, sweep, or a pulse. Surface optimization potentials typically range from 2 volts to 0. A surface optimization step may be less than 20 seconds in duration, typically from 10 to 20 seconds. The optimization step may be a cycle, sweep or a pulse. For example, the surface optimization potential for an electrode can be determined by performing a voltammetric sweep of the electrode in a solution of an inorganic acid. An applied potential during the bath analysis that is anodic of the oxide layer formation determined from the voltammetric sweep in a solution of an inorganic acid such as sulfuric acid is an example of a surface optimization step. A potential for surface optimization is most preferably close to the onset of the oxide layer formation determined from the voltammetric sweep. Surface optimization potentials may be employed at a rate of 50 mV/sec to 150 mV/sec.

Prior to measuring a quantity of an unknown organic component of an electroplating bath, a standard calibration curve is prepared. A plurality of bath samples having known and different concentrations of the organic component to be measured are prepared. Each bath is run through a galvanostatic, voltammetric, or open circuit steps or combinations thereof and includes a surface optimization step. Energy output of a working electrode is monitored for each bath sample of known organic component concentration during metal plating or metal stripping. Energy output may be the total charge passing through the working electrode, which is measured in coulombs. The results are plotted on a Cartesian plane of energy output versus organic component concentration to form a standard calibration curve for a given organic component.

After a standard calibration curve is prepared the same operation is performed with an operating electroplating bath sample containing the unknown amount of the organic component. The working electrode is placed in the bath containing the unknown concentration of the organic component and is passed through a predetermined sequence of galvanostatic, voltammetric, or open circuit steps or combinations thereof and includes surface optimization. Energy output of the working electrode measured either during metal plating or metal stripping is recorded and then correlated to the energy output value on the standard calibration curve. The corresponding energy output value allows for the determination of the organic component concentration sought in the unknown sample.

Any suitable apparatus for plating and stripping a metal on a working electrode may be employed to measure organic bath components. Examples of such apparatus are described below, however, the practice of the present invention is not limited to such apparatus.

A three electrodes cell is typically employed with a rotating disk working electrode, typically made of an inert metal. A counter/auxiliary electrode may be composed of iridium oxide coated titanium and separated from solution by a salt bridge. The reference electrode is typically a saturated calomel electrode (SCE), and all voltages referred to hereafter are vs. SCE.

Because the types of organic components in electroplating baths may vary, the present invention is described in the context of measuring organic brighteners in electroplating baths. However, the method of the present invention may be employed to measure other organic components by analogy to the methods described herein.

Exemplary CVS or CPVS analytical methods, absent the novel surface optimization step of the present invention, are those disclosed in U.S. Patent 4,132,605 (Tench et al.) and Tench et al., *Pulse Voltammetric Stripping Analysis ofAcid Copper Plating Baths,* J. Electrochem. Soc., Apr. 1985, pp 831-834. In such methods, a small amount of metal is electrodeposited onto an inert electrode (e.g., platinum or gold) under controlled conditions of electrode potential and mass-transport in the solution. The amount of metal deposited is determined by integrating the current peak arising from re-dissolution or "stripping" of the deposited metal from the surface as the electrode potential is swept anodic at a known rate. The quantity of metal deposited, and subsequently re-dissolved, is related to the concentration of brightener affecting the rate of deposition. The cathodic current required to deposit the metal also is an indication of the deposition rate, but is less preferred than the anodic current. The cathodic current is less precise because of reduction reactions (such as the reduction of organic compounds in the bath) that occur during the cathodic portion of the voltammetric cycle.

A CVS cycle of the present invention may be schematically illustrated as follows:
V_{surface optimization} Vₚₗₐₜₑ Vₛₜᵣᵢₚ

A CPVS cycle of the present invention may be schematically illustrated as follows:
V_{surface optimization} Vₚₗₐₜₑ Vₛₜᵣᵢₚ V_{clean} V_{equilibrate}

In another embodiment, the present invention provides a method for determining the quantity of brightener in an electroplating bath including the steps of: a) obtaining a plurality of plating bath samples where each bath has a known and different quantity of the brightener; b) for each bath sample, employng a typical three electrode cell immersed in the bath sample, and carrying out a predetermined sequence of voltammetric steps by sweeping the working electrode at a predetermined rate through a plurality of voltammetric steps until a steady state condition is obtained, the steps include: 1. surface optimization of the working electrode; 2. plating metal ions on the working electrode with energy input for a time sufficient to measure plating energy output; 3. stripping at a potential and for a period of time sufficient to remove the metal ions plated in step 2 and to measure stripping energy output; and c) for each bath sample, correlating the quantity of brightener with the energy output value obtained in step 2 or 3; d) obtaining a plating bath having an unknown quantity of brightener, placing the electrodes in the bath sample and performing the predetermined sequence of steps; e) choosing from the correlations in step d), a particular correlation for a bath containing the amount of brightener determined in step c).

In a further embodiment, the present invention involves determining the unknown concentration of a brightener in a bath according to the steps of: a) obtaining a plurality of bath samples, where each bath sample has a known but different concentration of brightener and where the quantity of each bath sample differs from the quantity in the other bath samples; b) pulsing a working electrode in a bath sample at a predetermined rate through a plurality of voltammetric steps until a steady state condition is obtained, each of the voltammetric steps includes a surface optimization range, a plating range, a stripping range, a cleaning range and an equilibration range; c) measuring the charge passed during the metal plating or stripping range of each cycle for each bath sample for the plurality of bath samples where a correlation is obtained between the quantity of brightener and the charge passed during the metal plating or metal stripping range; d) obtaining a bath sample having an unknown quantity of brightener; e) pulsing a working electrode in an unknown bath sample at the predetermined rate through a plurality of voltammetric pulse until a condition of steady state is obtained, each of the voltammetric steps includes a surface optimization range, a metal plating range, a metal stripping range, a cleaning range and an equilibration range for the bath sample having an unknown quantity of brightener; f) measuring the charge passed during the metal plating or metal stripping range for the bath sample having an unknown quantity of brightener; and g) choosing from the correlation a quantity of brightener which corresponds to the charge passed for the bath sample having the unknown quantity of brightener.

A wide variety of electroplating baths may be analyzed according to the present invention to determine the quantity of brightener and other organic bath components. Suitable electroplating baths include, but are not limited to, copper, nickel, chromium, zinc, tin, lead, gold, silver, solder, or cadmium electroplating baths, and preferably copper electroplating baths.

Working electrodes include any that provide a uniform current density and controlled agitation. Suitable working electrodes include, but are not limited to, platinum, copper, nickel, chromium, zinc, tin, gold, silver, lead, cadmium, solder, graphite, palladium, rhodium, ruthenium, glassy carbon, mercury or stainless steel. Preferably, the working electrode is a noble metal, more preferably platinum or gold, and most preferably gold. The working electrode may have a flat, polished surface, small diameter and may be mounted flush with the end of a Kel-F cylinder. To establish relative motion between the working electrode and the bath, a motor is typically used to rotate the working electrode to which contact is made by slip brushes. Thus, it is further preferred that the working electrode is a rotating disk electrode ("RDE"). A small diameter disk is preferred since a larger diameter will result in poor sensitivity due to nonuniform current density across the diameter. The reference electrode may be a saturated calomel reference electrode ("SCE"), a standard hydrogen electrode ("SHE") or any suitable reference electrode. The counter electrode may be a noble metal, metal oxide, or noble metal alloy such as gold, platinum, iridium oxide coated titanium, platinum-ruthenium, or may be a soluble anode composed of the same metal that is present in the bath such as a soluble copper anode for use with a copper electrolyte bath.

A variety of instruments are commercially available to perform these analyses utilizing the methods of the invention and incorporate a variety of steps. Such instruments are widely used in the printed wiring board industry for control of electroplating baths. Suitable commercial instruments are those sold by ECI Technology, Inc. (East Rutherford, New Jersey).

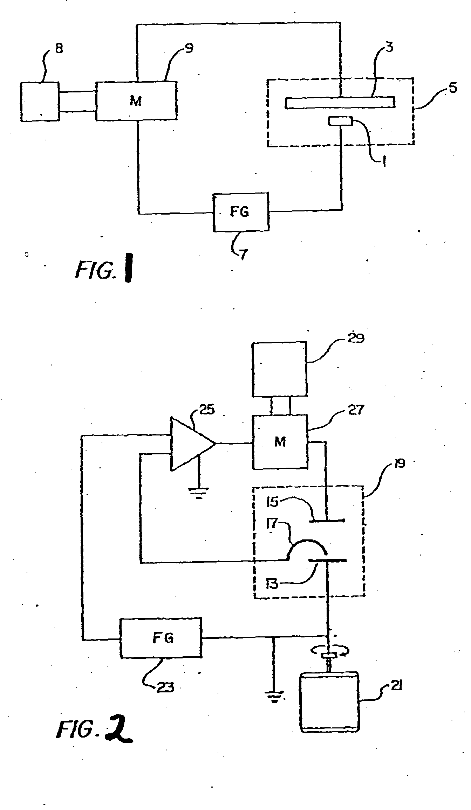

FIG. 1 is a schematic wiring diagram showing a device for determining the quantity of brightener according to the present invention. A working electrode **1** and a counter electrode **3** are immersed in a bath in cell **5**. The counter electrode is selected and designed so as not to be easily polarized in the particular bath being evaluated. This is accomplished, in part, by making the counter electrode large relative to the working electrode and by placing it close to the working electrode.

A function generator **7** sweeps the working electrode **1** through a voltage versus time cycle at a specific rate while a coulometer **9** measures the coulombs (amp-seconds) flowing between the counter electrode **3** and the working electrode **1** during the metal stripping portion of the voltammetric cycle. The coulometer may be an ammeter whose output can be fed into a recorder for determining the coulombs utilized during the stripping portion of the cycle, or the output can go directly into a microprocessor or computer **8** for direct correlation and comparison of the coulombs utilized.

FIG. 2 shows the schematic wiring diagram for a more elaborate device for determining the quantity of brightener. Three electrodes, a working electrode **13,** a counter electrode **15**, and a reference electrode **17**, are immersed in a bath in cell **19.** To establish relative motion between the working electrode **13** and the bath, a motor **21** is used to rotate the working electrode **13** to which contact is made by slip brushes.

In one embodiment, the working electrode **13** is gold and the counter electrode **15** is an iridium oxide coated titanium mesh electrode. The rotatable working electrode **13** has a flat, polished surface, 0.13 cm² in area, mounted flush with the end of a 1.27 cm diameter Kel-F cylinder. The reference electrode **17** is a saturated calomel reference electrode ("SCE"). A function generator **23** and an electronic potentiostat **25** are used to control the potential relative to the reference electrode **17**. A digital coulometer **27** measures the coulombs flowing during the stripping portion of the voltammetric cycle.

A microprocessor or computer **29** can be coupled to the digital coulometer to compare the measured coulombs with a previously established correlation. The microprocessor or computer **8, 29,** shown in FIGS. 1 and 2, can be coupled to the circuit so that they are triggered either manually or by a suitable signal from the function generator **7, 23,** or from the working electrode **1, 13**.

To achieve maximum sensitivity, there must be sufficient relative motion between the working electrode and the bath to maintain a uniform supply of plating ingredients at the electrode surface. Without such motion, the metal ions become depleted at the surface of the electrode. In the embodiment shown in FIG. 2, the working electrode **13** is rotated by motor **21** to obtain controlled relative motion between the working electrode **13** and the plating bath. Other means of obtaining relative motion can be used, such as a pump for moving the bath across the face of the electrode.

In some cases, variation in the plating and stripping current may be observed from day to day for a particular bath composition and are may be caused by uncontrolled variables, such as changes in the working electrode surface. Such variations can be mitigated by measuring the plating or stripping current utilized by a fixed standard immediately before or after making the desired measurement and then utilizing the ratio of the two measurements to obtain the correlation between the plating or stripping current and concentration of ingredients.

The methods of the present invention may be employed to control metal electroplating baths such as copper, nickel, chromium, zinc, tin, gold, silver, lead, cadmium and solder. The working electrode may be selected or initially plated to match the metal in the plating bath in order to maximize adsorption of the brighteners used in the baths.

While the present invention may be used with a wide variety of plating baths, it may be illustrated with respect to a copper electroplating bath. An example of a copper electroplating bath useful for the practice of this invention has a composition as follows:

| Component | Amount |
|---|---|
| Copper ions | 2.5 to 40.0 g/l |
| Sulfuric acid (added) | 0 to 450 g/l |
| Chloride ions | 20 to 100 ppm |
| Organic additive | As required |
| Water | To 1 liter |

The plating baths are used in the conventional manner, with operating temperatures preferably between 10° and 40° C, and controlled bath agitation.

The method of determining the quantity of brightener may begin with a cleaning step to clean the working electrode. The working electrode may be cleaned chemically by treating with nitric acid followed by rinsing with deionized water. The chemically cleaned working electrode is then immersed in an additive-free bath sample. The working electrode is then cleaned and electrochemically oxidized at a fixed potential for a period of time. Alternatively, the cleaning may be carried out by a voltammetric sweep, from 1.6 volts to -0.25 V swept from 50 mV/sec. Alternatively, the cleaning may be carried out galvanostatically at an anodic current of greater than 30 mA/cm² for a period of time of from 2 to 10 seconds.

The method may be continued by any one of the steps or combinations of steps described herein to measure organic bath additives.

Brighteners used in conjunction with the present invention include any sulfonated sulfur-containing compounds, which are known and used in the electroplating art. Suitable brighteners useful in the practice of the invention contain the group -S-R₁-SO₃H, where R₁ may be an alkyl or aryl group, and are illustrated by the following structural formulas: HO₃ S-R₂ -SH, HO₃ S-R²-S-S-R₂ -SO₃ H (where R₂ = C₁-C₆ alkyl) and HO₃ S-Ar-S-S-Ar-SO₃ H (where Ar = phenyl or naphthyl), and the corresponding alkali metal salts. Such compounds are disclosed in U.S. Pat. Nos. 3,770,598, 4,374,709, 4,376,685, 4,555,315 and 4,673,469.

In addition to the organic components identified above, as is known in the art, other organic additives may be used in the plating bath such as surfactants, levelers, wetting agents and carriers.

The above methods may be performed at a range of temperatures. The analysis of the bath containing the unknown amount of brightener may be performed at the same temperature as the calibration curve samples or family of calibration curve samples.

The following examples are presented to illustrate further various aspects of the present invention, but are not intended to limit the scope of the invention in any aspect.

### Example 1

### Gold Working Electrode vs. Platinum Working Electrode

An apparatus having the arrangement as illustrated in FIG. 2 was used to compare the performance of a gold working electrode to a platinum working electrode for measuring brightener content in a copper metal plating bath. The apparatus is equipped with a rotator that allows for the working electrode disk to be screwed on. Both the platinum and gold working electrodes are 3 mm in diameter. The reference electrode for each apparatus was an SCE and the counter electrode was an iridium oxide coated titanium electrode. Both electrodes underwent identical treatment prior to measuring the brightener levels.

Prior to the analysis, each working electrode was cleaned chemically by treating with nitric acid followed by rinsing with deionized water. Each working electrode was then electrochemically cycled in a standard copper electroplating bath from 1.6 V to -0.25 V to clean the surface of the working electrode.

Four separate electroplating bath samples were prepared, each containing a different amount of brightener. Each bath contained 80 g/L copper, 225 g/L sulfuric acid, 25 ppm of chloride and 15 ml/L of Shipley PPR-H carrier solution. The brightener employed was Shipley Ronal Copper Gleam ST 901® Additive Solution. Each bath was analyzed for brightener using an Electroposit Bath Analyzer, available from S-Systems, Norwood, MA. A schematic of the cycle may be represented as follows:
V_{clean} V_{surface optimization} Vₚₗₐₜₑ Vₛₜᵣᵢₚ

The working electrode was cleaned at 1.6 V for 5 seconds. Next the working electrode was held at 0.55 V for 18 seconds to optimize the surface of the working electrode. The applied potential was then held at -0.25 V for 1 second to plate copper on the working electrode. The applied potential was then increased to 0.20 volts for 5 seconds to strip the plated copper from the working electrode. The Bath Analyzer then generates a TBA number, which is proportional to the amount of charge passed during the stripping step. The amount of brightener measured by the Electroposit Bath Analyzer for each electrode is reported in TBA units in Table 1 below.

**Table 1**

| Brightener Level (mL/L) | TBA Units with Gold Electrode | TBA Units with Platinum Electrode |
|---|---|---|
| 0 | 0.47 | 0.90 |
| 0.2 | 6.90 | 1.67 |
| 0.4 | 15 64 | 2.65 |
| 0.6 | 22.50 | 3.99 |

The results tallied in Table 1 show that the TBA values (charge passed during stripping) reported for a gold working electrode are more amplified in measuring brightener concentration than a platinum working electrode. A larger energy output results from the same energy input.

### Example 2

### Effect of Surface Optimization Potential on Copper Plating

An apparatus with the same set up as Example 1 was used to measure the response of a gold working electrode to different surface optimization potentials in an acid-copper plating bath. The reference electrode for each apparatus was an SCE and the counter electrode was an iridium oxide coated titanium electrode separated from solution by a salt bridge.

Prior to the analysis, the gold working electrode was cleaned chemically by treating with nitric acid followed by rinsing with deionized water. The working electrode was then electrochemically cycled in an additive free copper electroplating bath from 1.6 V to -0.25 V vs. SCE to clean the surface.

Four separate electroplating bath samples were prepared, each containing a different amount of brightener. Each bath contained 80 g/L copper, 225 g/L sulfuric acid, 25 ppm of chloride, and 15 ml/L of Shipley PPR-H carrier solution. The brightener employed was Shipley Ronal Copper Gleam ST 901® Additive Solution. Each bath was analyzed for brightener using an Electroposit Bath Analyzer, available from S-Systems, Norwood, MA. A schematic of the cycle may be represented as follows:
V_{clean} V_{surface optimization} Vₚₗₐₜₑ Vₛₜᵣᵢₚ

The working electrode was cleaned at 1.6 V for 5 seconds. Next the working electrode was held at either 0.25 V or 0.55 V for 18 seconds to optimize the surface of the working electrode. The applied potential was then held at -0.25 V over 1 second to plate copper on the working electrode. The applied potential was then increased to 0.20 volts over 5 seconds to strip the plated copper from the working electrode. The Bath Analyzer then generates a TBA number, which is proportional to the amount of charge passed during the stripping step. The amount of brightener measured by the Electroposit Bath Analyzer for each electrode is reported in TBA units in Table 2 below.

**Table 2**

| Brightener Level (mL/L) | TBA Units at 0.55 V | TBA Units at 0.25 V |
|---|---|---|
| 0 | 0.47 | 0.87 |
| 0.2 | 6.90 | 1.15 |
| 0.4 | 15.64 | 1.38 |
| 0.6 | 22.50 | 1.55 |

Since the response in TBA units is directly proportional to the amount of copper stripped off the electrode, the results clearly show the improvement in amplification of plating response with respect to the choice of surface optimization potential.

## Claims

1. A method of determining a quantity of organic component in a bath comprising:
a) obtaining a plurality of bath samples each containing a known and different quantity of an organic component;
b) passing a working electrode in the bath sample through a sequence comprising galvanostatic steps, voltammetric steps by cycles or pulses, or open circuit steps or combinations thereof and the sequence comprises a surface optimization step;
c) preparing a calibration curve by plotting the charge passed during a metal plating or metal stripping step of the sequence versus the concentration of the organic component being sought;
d) obtaining a bath sample comprising an unknown quantity of the organic component and passing the working electrode through the bath using the aforesaid predetermined sequence of steps;
e) measuring the charge passed during the metal plating or the metal stripping step for the bath sample comprising the unknown quantity of the organic component; and
f) comparing the result obtained in e) to the results obtained in c) to determine the amount of the organic component present in the bath sample containing the unknown quantity of the organic component.

2. The method of claim 1, wherein the surface optimization step includes an applied potential sufficient to remove residual halide from the working electrode.

3. The method of claim 2, wherein the applied potential for the surface optimization step ranges from 2 volts to 0 volts.

4. The method of claim 1, wherein the surface optimization step is applied to the working electrode as a rate of from 50 mV/sec to 150 mV/sec.

5. The method of claim 1, wherein the surface optimization step is applied to the working electrode for less than 20 seconds.

6. The method of claim 1, wherein the working electrode comprises a noble metal.

7. The method of claim 1, wherein the working electrode comprises a non-noble metal.

8. The method of claim 1, wherein the bath is an electroplating bath for depositing copper, nickel, chromium, zinc, tin, lead, gold, silver, or cadmium on a substrate.

9. A method for determining an amount of brightener in a bath comprising:
a) obtaining a plurality of baths each bath comprising a known and different quantity of the brightener and where the quantity of the brightener in each bath differs from the quantity in the other baths;
b) for each bath, providing a counter electrode, a cleaned working electrode and a reference electrode immersed in the bath, and carrying out a predetermined sequence of steps by sweeping the working electrode at a predetermined rate through a plurality of sequences comprising galvanostatic, voltammetric, or open circuit steps or combinations thereof until a steady state is obtained, the steps comprise:
1. optimizing the surface of the working electrode;
2. plating metal ions on the working electrode for a time sufficient to measure plating current;
3. stripping at a potential and for a period of time sufficient to remove the metal ions plated in step 2 and measuring the stripping current; and
c) for each bath, preparing a calibration curve of amount of charge passed in step 2 or 3 above vs. organic component concentration;
d) obtaining a plating bath sample having an unknown quantity of organic component, placing the electrodes in the bath and performing the aforesaid predetermined sequence of steps; and
e) comparing the results in step d) to those obtained in c) to determine the amount of the organic component present in the unknown sample.

10. A method for determining an amount of brightener in a bath comprising:
a) obtaining a plurality of bath samples, where each bath sample has a known and different quantity of the brightener and where the quantity of the brightener in each bath sample differs from the quantity in the other bath samples;
b) pulsing in each of the bath samples an inert, working electrode at a predetermined rate through a sequence comprising galvanostatic, voltammetric, or open circuit steps, or combinations thereof, each of the sequences comprise a surface optimization range, a metal plating range, a metal stripping range, a cleaning range, and an equlibration range for each of the bath samples of the plurality of bath samples;
c) measuring the charge passed during the metal plating range or the metal stripping range of the cycle for each of the bath samples to obtain a correlation between a quantity of brightener and the charge passed during the metal plating range or the metal stripping range, and preparing a calibration curve of charge passed vs. organic component concentration;
d) obtaining a bath samples comprising an unknown quantity of organic component;
e) pulsing for the unknown bath samples an inert, working electrode at the predetermined rate through sequences comprising galvanostatic, voltammetric, or open circuit steps or combinations thereof until a condition of steady state is obtained, each sequence comprises a surface optimization range, a metal plating range, a metal stripping range, a cleaning range and an equilibration range for the bath samples comprising an unknown quantity of brightener;
f) measuring the charge passed during the metal plating range or the metal stripping range for the bath samples comprising the unknown quantity of organic component; and
g) choosing from the correlation a quantity of brightener which corresponds to the charge passed for the bath samples comprising the unknown quantity of the organic component.
